# EUROPEAN PATENT APPLICATION

(11) **EP 4 775 027 A1**
(43) Date of publication of application: **15.07.2026**
(21) Application number: 25861678.8
(22) Date of filing: 16.09.2025
(51) Int. Cl.: A01K 1/01

(54) **CAT LITTER CLEANING APPARATUS**

(30) Priority: 17.10.2024 CN 202411453455
(71) Applicant: Shanghai Omay Electronics Co., Ltd, Shanghai 201299 (CN)
(72) Inventor: The designation of the inventor has not yet been filed
(74) Representative: Santarelli
(86) International application number: PCT/CN2025/121575
(87) International publication number: WO 2026/081765

(57) **Abstract**

The present disclosure provides a cat litter cleaning device, comprising a drive module and an accommodating module; the drive module is used to enable the accommodating module to rotate along a preset rotation axis; the accommodating module comprises an accommodating cavity and a retractable unit, and the accommodating cavity is configured to be retractable and used for installing a cat litter box; the retractable unit is connected to the accommodating cavity and used to enable the accommodating cavity to retract axially along the rotation axis. By means of the retractable rotary compartment and housing, the cat litter cleaning device can be compressed for convenient transport and storage. The device is matched with a mobile power supply for easy mobile use, as well as a removable and replaceable disposable cat litter box which separates the cat litter from the cat litter cleaning device to keep the device clean.

## Description

### Technical Field

The present disclosure relates to the technical field of pet supplies, and in particular to a cat litter cleaning device.

### Background of the Invention

With the improvement of living standards, more and more users are willing to keep pets to relieve the pressure of life and work. In the process of keeping pets, users generally choose pet excrement disposal device to deal with pet excrement.

The automatic cat litter cleaning device on the market is often large in size, which is not convenient for transportation, storage, and mobile use; at the same time, when the pet cat excretes, the excrement is easy to contaminate the interior of the device and needs to be cleaned frequently to ensure the cleanliness of the device, resulting in poor user experience.

### Summary of the Invention

The technical problem to be solved by the present disclosure is to provide a cat litter cleaning device in order to overcome the defects of the prior art in which the cat litter cleaning device is large-sized and inconvenient for transporting, warehousing, and mobile use, and the interior of the device is easily contaminated by excrement.

The present disclosure is designed to solve the above technical problems by the following technical solutions:
The present disclosure provides a cat litter cleaning device, comprising a drive module and an accommodating module;
The drive module is used to enable the accommodating module to rotate along a preset rotation axis;
The accommodating module comprises an accommodating cavity and a retractable unit, and the accommodating cavity is configured to be retractable and used for installing a cat litter box; The retractable unit is connected to the accommodating cavity and used to enable the accommodating cavity to retract axially along the rotation axis.

Preferably, the accommodating cavity comprises a first rotary compartment and a second rotary compartment movably connected to the first rotary compartment, and the first rotary compartment is connected to the retractable unit so that the first rotary compartment is retractable.
Preferably, the first rotary compartment is provided with a first outer edge;
The retractable unit comprises at least two retractable rod members, the retractable rod member comprises a base and a retractable part, and the top end of the retractable part is provided with a first guide wheel matching the first outer edge;
**The** first guide wheel, which is movably connected to the first outer edge, is used to guide the first outer edge to rotate circumferentially along the first guide wheel, and the movement of the retractable part drives the first outer edge so that the first rotary compartment can retract. Preferably, the second rotary compartment is provided with a second outer edge; the retractable unit further comprises a fixed platform, and the base of the retractable rod members is connected to the fixed platform;
**The** fixed platform is further provided with a second guide wheel that is parallel to the first guide wheel;

**The** second guide wheel is matched with the second outer edge, the second guide wheel is movably connected to the second outer edge, and the second guide wheel is used to guide the second outer edge to rotate circumferentially along the second guide wheel.

Preferably, the second rotary compartment is provided with a transmission part, and the transmission part is connected to the drive module;
The drive module drives the second rotary compartment to rotate by means of the transmission part, and the second rotary compartment drives the first rotary compartment to rotate.
Preferably, the cat litter box comprises a waste box, a separation zone and a main compartment zone, the waste box is separated from the main compartment zone by a partition with an inwardly flapable door on the side facing the main compartment zone, an inlet is arranged on one side of the main compartment zone, and the waste box and the separation zone are arranged on the circumferential surface perpendicular to the inlet side;
The waste box further comprises a baffle plate rotating coaxially with and connected to the door, and the baffle plate is used to block the excrement from passing through the door;
and/or, the separation zone is arranged adjacent to the waste box, and a screen is arranged between the separation zone and the main compartment zone.

Preferably, the main compartment zone of the cat litter box has a crease for folding the main compartment zone, which enables the main compartment zone to be folded by bending the crease; and the main compartment zone is provided with a first pull rope, one end of the first pull rope is connected to the baffle plate of the waste box, and the first pull rope is used to pull the baffle plate to stand up when the main compartment zone is unfolded;
and/or, the main compartment zone is made of waterproof material.

Preferably, the device further comprises a housing, and housing comprises a first shell and a second shell, with the first shell being sleeved with the second shell;
The first shell is matched with the first rotary compartment and the first shell retracts synchronously with the first rotary compartment.

Preferably, the second shell is provided with a limiting unit, and the first shell is provided with a limiting hole matched with the limiting unit;
The limiting unit is configured to extend into the limiting hole to fix the first rotary compartment and the second rotary compartment when the first rotary compartment is raised to a preset position.

Preferably, the first shell comprises a panel, further comprising:
A detachable accessory, for which a plug-in interface is provided on the panel, used for installing the detachable accessory;
and/or, the panel is provided with an opening, and the opening is provided with a toggle plate formed by extending towards the inside of the housing;
The toggle plate is used for toggling the baffle plate in the cat litter box;
and/or, the panel is provided with an opening, and the opening is provided with a retaining edge formed by extending towards the inside of the housing.

On the basis of conformity with common knowledge in the field, each of the above preferred conditions may be arbitrarily combined to obtain each of the preferred embodiment of the present disclosure.

The positive progressive effect of the present disclosure is that the cat litter cleaning device can be compressed by means of the retractable rotary compartment and housing, which facilitates the transport and storage of the device, and a mobile power supply is provided for mobile use. Optionally, a removable and fully replaceable litter box can be used to separate the cat litter from the cat litter cleaning device to keep the cat litter cleaning device clean.

### Brief Description of the Drawings

Fig. 1 is the schematic diagram of the first structure of the cat litter cleaning device of embodiment 1 of the present disclosure;
Fig. 2 is the schematic diagram of the contracted state of the accommodating module in the cat litter cleaning device of embodiment 1 of the present disclosure;
Fig. 3 is the schematic diagram of the raised state of the accommodating module in the cat litter cleaning device of embodiment 1 of the present disclosure;
Fig. 4 is the schematic diagram of the raised state of the housing in the cat litter cleaning device of embodiment 1 of the present disclosure;
Fig. 5 is the schematic diagram of the structure of the limiting unit in part A of the cat litter cleaning device of embodiment 1 of the present disclosure;
Fig. 6 is the schematic diagram of the structure of the cat litter box in the cat litter cleaning device of embodiment 1 of the present disclosure;
Figure 7 is the schematic diagram of the folded state of a cat litter box in the cat litter cleaning device of embodiment 1 of the present disclosure;
Fig. 8 is the schematic diagram of the cat litter box unfolding process in the cat litter cleaning device of embodiment 1 of the present disclosure;
Fig. 9 is the schematic diagram of the second structure of the cat litter cleaning device of embodiment 1 of the present disclosure;
Fig. 10 is the schematic diagram of the panel structure of the cat litter cleaning device of embodiment 1 of the present disclosure;
Fig. 11 is the schematic diagram of the structure of the contracted cat litter cleaning device of embodiment 1 of the present disclosure;
Fig. 12 is the first schematic diagram of the cleaning process of the cat litter cleaning device of embodiment 1 of the present disclosure;
Fig. 13 is the second schematic diagram of the cleaning process of the cat litter cleaning device of embodiment 1 of the present disclosure;
Fig. 14 is the third schematic diagram of the cleaning process of the cat litter cleaning device of embodiment 1 of the present disclosure;
Fig. 15 is the fourth schematic diagram of the cleaning process of the cat litter cleaning device of embodiment 1 of the present disclosure;
Fig. 16 is the fifth schematic diagram of the cleaning process of the cat litter cleaning device of embodiment 1 of the present disclosure;

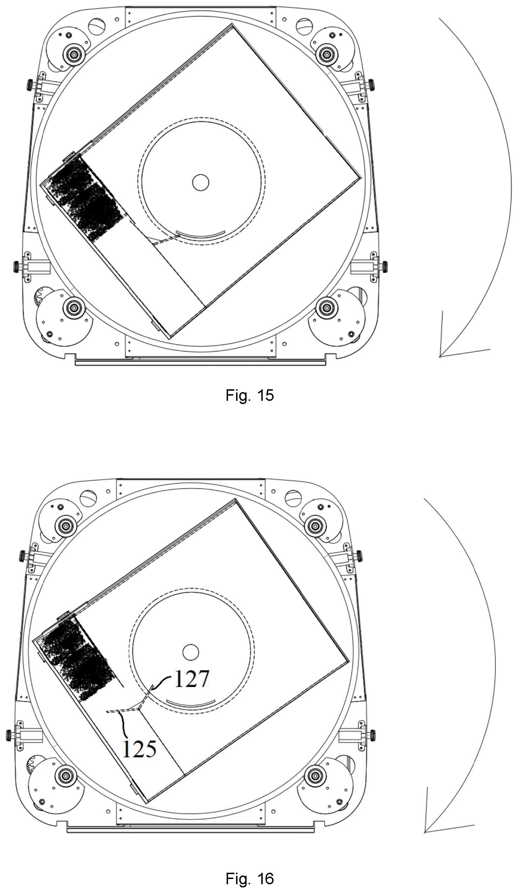

Fig. 16 is the sixth schematic diagram of the cleaning process of the cat litter cleaning device of embodiment 1 of the present disclosure.

### Description for the accompanied drawing

Drive module 100;
Accommodating module 200;
First rotary compartment 210;
First outer edge 211;
Second rotary compartment 220;
Second outer edge 221;
Transmission part 222;
Retractable rod member 230;
Retractable part 231;
Base 232;
First guide wheel 234;
fixed platform 240;
Second guide wheel 241;
Cat litter box 12;
Inlet 121;
Main compartment zone 122;
Waste box 123;
Separation zone 124;
Door 125;
Screen 126;
Baffle plate 127;
Second pull rope 128;
Housing 300;
First shell 301;
Second shell 302;
Limiting unit 330;
Movable bolt 331;
Claw 332;
Self-locking switch 333;
Spring 334;
Limiting hole 304;
First pull rope 305;
Excrement 4;
Panel 310;
Toggle plate 311;
Retaining edge 312;
Pedal 313.

### Detailed Description of Embodiments

The present disclosure is further described below by way of embodiments, but not thus limiting the present disclosure to the scope of the described embodiments.

Prefixes such as "first" and "second" are used in the embodiments of the present disclosure solely for the purpose of distinguishing different described objects, and have no limiting effect on the position, order, priority, number, or content of the described objects. The use of prefixes, such as ordinal words, for distinguishing the described objects in embodiments of the present disclosure does not constitute a limitation on the described objects; refer to the contextual description in the claims or embodiments for the statement the described objects, and the use of such prefixes should not constitute a redundant limitation. In addition, in the description of the present embodiment, unless otherwise indicated, "multiple" means two or more.

### Embodiment 1

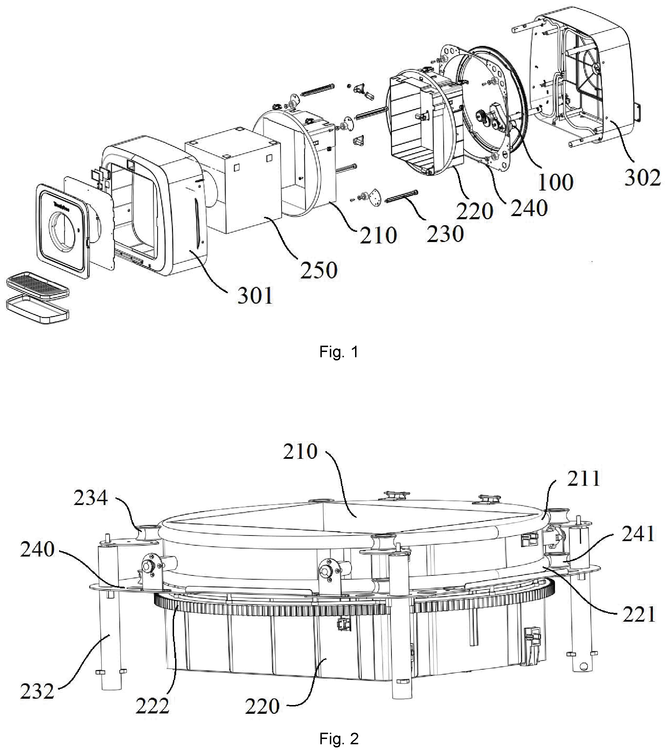

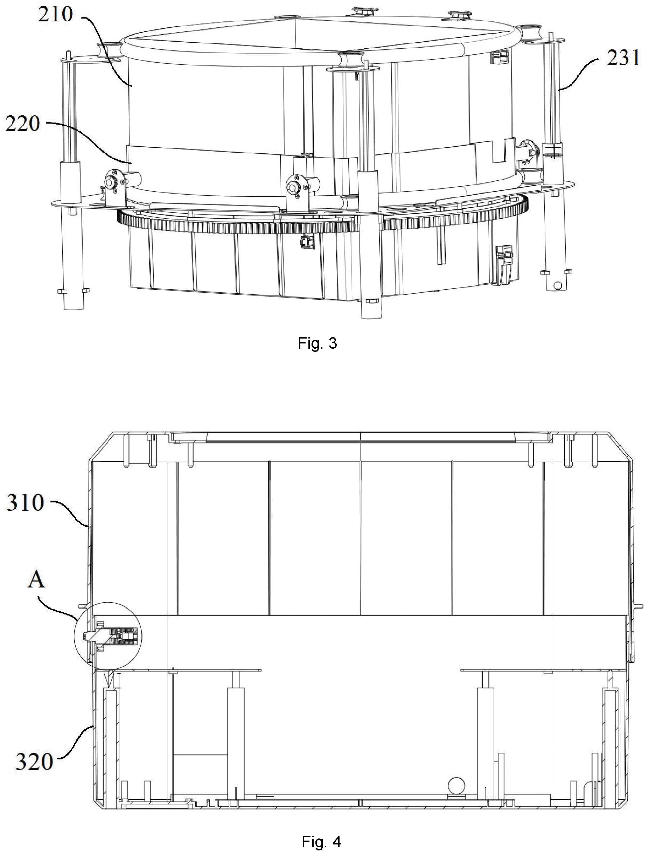

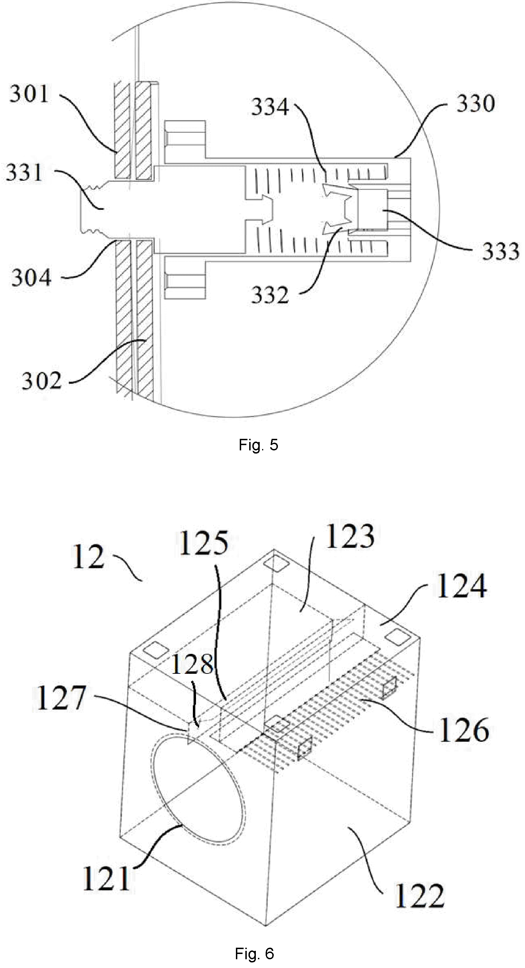

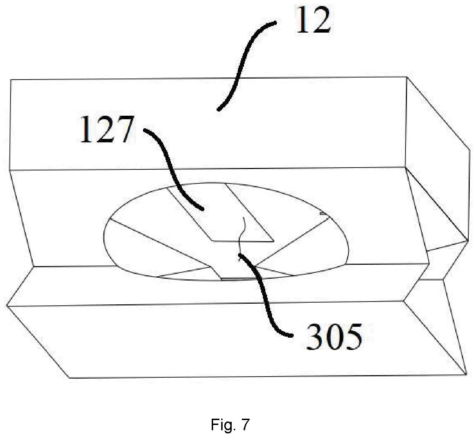

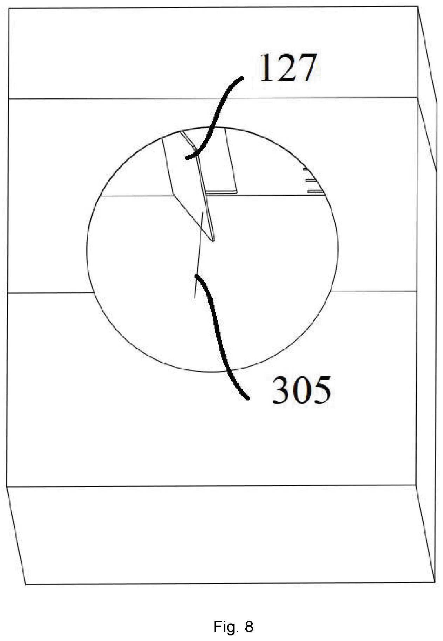

As shown by Fig.1 to Fig. 10, the embodiment provides a cat litter cleaning device, comprising a drive module 100 and an accommodating module 200;
The drive module 100 is used to enable the accommodating module 200 to rotate along a preset rotation axis;
The accommodating module 200 comprises an accommodating cavity and a retractable unit, and the accommodating cavity is configured to be retractable and used for installing a cat litter box;
The retractable unit is connected to the accommodating cavity and used to enable the accommodating cavity to retract axially along the rotation axis.

In this embodiment, the accommodating module 200 in the cat litter cleaning device compresses the accommodating cavity during transport and storage, reducing the volume of the entire cat litter cleaning device by at least half, greatly enhancing the efficiency of transport and storage. When using the cat litter cleaning device, the accommodating cavity is pulled up and restored to its maximum volume, the removable cat litter box is installed into the accommodating chamber, and the cat litter cleaning device rotates through a preset workflow, completing the automatic spreading of cat litter in the cat litter box. It can be used directly to realize a high degree of automation and cleanliness of the litter cleaning device and improve the user experience.

As an implementable way, the accommodating cavity comprises a first rotary compartment 210 and a second rotary compartment 220 movably connected to the first rotary compartment 210, and the first rotary compartment 210 is connected to the retractable unit so that the first rotary compartment 210 is retractable.

In this embodiment, the first rotary compartment 210, used as the retractable structure of the accommodating cavity, is configured to be transformable, e.g., the first rotary compartment 210 can be folded and retracted into the second rotary compartment 220; alternatively, the accommodating cavity comprises a number of first rotary compartments 210, all of which are sequentially sleeved and capable of collapsing to fit into the second rotary compartment 220. The second rotary compartment 220, as the underlying structure of the accommodating cavity, is connected to the drive module 100, and it enables the accommodating cavity to rotate via power of the drive module 100, driving the rotation of the first rotary compartment 210 connected to the second rotary compartment 220, so that the cat litter compartment within the first rotary compartment 210 rotates during use. In this way, the cat litter and/or excrement in the cat litter compartment can be automatically spread and cleaned.

As an implementable way, the first rotary compartment 210 is provided with a first outer edge 211;
The retractable unit comprises at least two retractable rod members 230, the retractable rod member 230 comprises a base 232 and a retractable part 231, and the top end of the retractable part 231 is provided with a first guide wheel 211 matching the first outer edge 234;
The first guide wheel 234, which is movably connected to the first outer edge 211, is used to guide the first outer edge 211 to rotate circumferentially along the first guide wheel 234, and the movement of the retractable part 231 drives the first outer edge 211 so that the first rotary compartment 210 can retract.

In this embodiment, at least three first guide wheels 234 are configured with the first outer edge 211 outside the first rotary compartment 210 acting as a guide rail. When the first rotary compartment 210 rotates, the first guide wheel 234 guides the rotational trajectory of the first rotary compartment 210 to avoid the rotational offset of the first rotary compartment 210. The first guide wheel 234 is matched with the first outer edge 211, and the first guide wheel 234 half-wraps the first outer edge 211 and drives the first rotary compartment 210 to retract through at least three first guide wheels 234 that have synchronized up-and-down movement.

In one embodiment, the retractable rod member 230 is pneumatically driven, inflated when raised and deflated when contracted. Thus, the rotational and retracting stability of the first rotary compartment 210 is improved.

As an implementable way, the second rotary compartment 220 is provided with a second outer edge 221; the retractable unit further comprises a fixed platform 240, and the base 232 of the retractable rod members 230 is connected to the fixed platform 240;
The fixed platform 240 is further provided with a second guide wheel 241 parallel to the first guide wheel 234;
The second guide wheel 241 is matched with the second outer edge 221, the second guide wheel 241 is movably connected to the second outer edge 221, and the second guide wheel 241 is used to guide the second outer edge 221 to rotate circumferentially along the second guide wheel 241.

In this embodiment, the second rotary compartment 220 is guided to rotate along the inner ring of the fixed platform 240 by means of the fixed platform 240 and the second guide wheel 241 on the fixed platform 240, and the second guide wheel 241 is matched with the second outer edge 221to limit the radial movement of the second rotary compartment 220 so that the retracting movement of the first rotary compartment 210 is not hindered by the second rotary compartment 220. The accommodating module 200 is relatively fixed to the second guide wheel 241 via the secondary outer edge 221, and the secondary guide wheel 241 is relatively fixed to the housing 300 via the fixed platform 240 so that the position of the accommodating module 200 and the housing 300 is relatively fixed. In this way, the retracting stability of the accommodating module 200 is improved.

As an implementable way, the second rotary compartment 220 is provided with a transmission part 222, and the transmission part 222 is connected to the drive module 100;
The drive module 100 drives the second rotary compartment 220 to rotate based on the transmission part 222, and the second rotary compartment 220 drives the first rotary compartment 210 to rotate.

In this embodiment, the outer wall of the second rotary compartment 220 is provided with a transmission part 222 for connecting with the drive module 100, the transmission part 222 is matched according to the type of the output part of the drive module 100; since the output part of the drive module 100 is a gear, a driven gear matched with the gear of the output part is provided on the outer wall of the rotary compartment 220. The driven gear is connected to the output gear of the drive module 100 to drive the rotation of the second rotary compartment 220 as well as the extended first rotary compartment 210, which in turn drives the rotation of the cat litter box installed in the accommodating module 200, so as to realize the automatic cleaning of the cat litter box.

As an implementable way, the cat litter box is magnetically connected to the accommodating module 200.

In this embodiment, a magnetic suction part is provided at a preset position of the cat litter box, and a matching magnetic suction member is provided on the inner wall of the holding module 200, such as the inner wall of the opening side of the first rotary compartment 210, so as to enable the cat litter box to meet the demand for quick installation and quick removal in the accommodating module 200, and ensure that the cat litter box is stably connected with the accommodating module 200 when it is rotated in the accommodating module 200, thus making the cat litter box a removable structure in the holding module 200 to facilitate the transport and storage of the cat litter cleaning device. The magnetic suction on the side is used for tensioning the rope net or screen to achieve accurate waste separation.

As an implementable way, the cat litter box comprises a waste box 123, a separation zone 124 and a main compartment zone 122, the waste box 123 is separated from the main compartment zone 122 by a partition with an inwardly flapable door 125 on the side facing the main compartment zone 122, an inlet is arranged on one side of the main compartment zone 122, and the waste box 123 and the separation zone 124 are arranged on the circumferential surface perpendicular to the inlet side;
The waste box 123 further comprises a baffle plate 127 rotating coaxially with and connected to the door 125, and the baffle plate 127 is used to block the excrement from passing through the door 125;
And/or, the separation zone is arranged adjacent to the waste box, and a screen is arranged between the separation zone and the main compartment zone.

In this embodiment, the cat litter box 12 is rectangular in shape, the cat litter box 12 comprises a waste box 123, a separation zone 124 and a main compartment zone 122, the waste box 123 is separated from the main compartment zone 122 by a partition with an inwardly flapable door 125 on the side facing the main compartment zone 122; a screen 126 is arranged between the separation zone 124 and the main compartment zone 122, and the screen 126 may be a separation net made of a plurality of ropes, used for separating the cat litter from the excrement 4. An inlet 121 is arranged on one side of the main compartment zone 122, and the waste box 123 and the separation zone 124 are arranged on the circumferential surface perpendicular to the inlet 121 side. Preferably, a baffle plate 127 is arranged on the hinged side of the door 125 of the waste box 123 to prevent the excrement from jumping and bumping over the opening position of the door 125 when rotating at a high speed. Wherein, the baffle plate 127, which is configured to be rotatable, rotates coaxially with the door 125, and a second pull rope 128 is provided between the baffle plate 127 and the door 125, so that the baffle pate 127 can be connected to the door 125 via the second pull rope 128. The toggle plate 311 acts coordinately during the cleaning process to prevent the excrement 4 from jamming the door 125, thus increasing the self-cleaning efficiency of the cat litter box.

As an implementable way, the main compartment zone 122 of the cat litter box 12 has a crease for folding the main compartment zone 122, which makes main compartment zone 122 foldable by bending the crease; and the main compartment zone 122 is provided with a first pull rope 305, one end of the first pull rope 305 is connected to the baffle plate of the waste box, and the first pull rope is used to pull the baffle plate 127 to stand up when the main compartment zone is unfolded;
And/or, the main compartment zone is made of waterproof material.

In this embodiment, the baffle plate 127 in the folded state is connected to the opening position of the waste box 123 by an adhesive or easy-to-tear strip, and the outside of the baffle plate 127 is connected to the main compartment zone 122 via the first pull cord 305; when the main compartment zone 122 is unfolded, the first pull cord 305 pulls the baffle plate 127 to tear away the adhesive or easy-to-tear strip, enabling the baffle plate 127 to extend towards the outside of the waste box 123, and a suitable angle will be formed and maintained for a long term. The baffle plate 127 is connected to the door 125 via the second pull cord 128, and the toggle plate 311 is used to control the opening of the baffle plate 127 and to prevent the excrement 4 in the waste box 123 from jamming the door 125 when the door 125 is opened or closed. Besides, the entire body or only the bottom surface of the main compartment zone 122 is made of waterproof material to achieve long-term preservation of the cat litter in unused state, and to avoid erosion of the main compartment zone 122 by cat urine in the used state, so as to improve the service life of the cat litter box 12.

As an implementable way, the first shell 301 comprises a panel, further comprising:
A detachable accessory which is provided with a plug-in interface on the panel 310, and the plug-in interface is used for installing the detachable accessory;
And/or, the panel 310 is provided with an opening, and the opening is provided with a toggle plate 311 extending towards the inside of the housing;
The toggle plate 311 is used for toggling the baffle plate 127 in the cat litter box 12;
And/or, the panel 310 is provided with an opening, and the opening is provided with a retaining edge 312 extending towards the inside of the housing.

In this embodiment, there are detachable accessories including decorative parts such as a pedal 313; by removing the detachable accessories, the housing 300 is flattened on the side with opening, and this facilitates the stacking of the contracted cat litter cleaning device and improves stability during transport.

In one embodiment, the inner side of the panel 310 is provided with a toggle plate 311, and the opening and closing angle of the baffle plate 127 is adjusted by the toggle plate 311 after the cat litter box 12 is installed in the first rotary compartment 301.

In one embodiment, the inner retaining edge 312 of the panel 310 is used to block the cat litter in the cat litter box 12 from spilling out of the opening of the panel 310 when the first rotating compartment 210 rotates.

As an implementable way, the device further comprises a housing 300, and the housing 300 comprises a first shell 301 and a second shell 302, with the first shell 301 being slidably engaged with with the second shell 302;
The first shell 301 is matched with the first rotary compartment 210 and the first shell 301 retracts synchronously with the first rotary compartment 210.

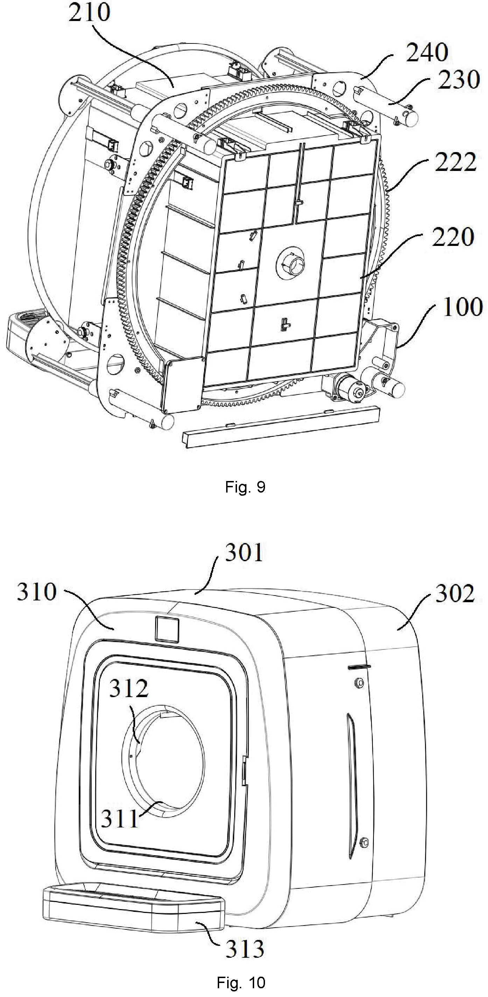

In this embodiment, the cat litter cleaning device includes the housing 300 that is synchronously retractable with the accommodating module 200, and the first shell 301 is fixedly connected to the first rotary compartment 210, capable of retracting synchronously with the first rotary compartment 210 and retracting relative to the second shell 302, with the contracted structure shown in Fig. 9. In one embodiment, the first housing 301 may form an integrated double-layer structure with the first rotary compartment 210, so that the housing 300 can be matched with the accommodating module 200 to reduce the overall size of the contracted cat litter cleaning device for easy transport and storage.

As an implementable way, the second shell 302 is provided with a limiting unit 330, and the first shell 301 is provided with a limiting hole 304 matched with the limiting unit 330;
The limiting unit 330 is configured to extend into the limiting hole 304 to fix the first rotary compartment 210 and the second rotary compartment 220 when the first rotary compartment 210 is raised to a preset position.

In this embodiment, the limiting unit 330 includes a movable bolt 331, a jaw 332, a self-locking switch 333, and a spring 334. When the first housing 301 is raised to the working position along with the first rotary compartment 210, the limiting unit 330 reaches the position of the corresponding limiting hole 304. At this time, the spring 334 pushes the movable bolt 331 to fall into the limiting hole 304, fixing the first shell 301 and the second shell 302. Before the cat litter cleaning device is contracted, the cat litter box in the accommodating module 200 is removed, and then the movable bolt 331 in the limiting hole 304 is pressed, so that the top of the movable bolt 331 squeezes the claw 332 to penetrate deep into the self-locking switch 333. Subsequently, the squeezed claw 332 closes to fix the top of the movable bolt 331, and the spring 334 is compressed by the action of the movable bolt 331. After all the limiting units 330 are fully self-locked, the first shell 301 is driven to contract by the first rotary compartment 210 whose movement is driven by the retractable rod members 230.

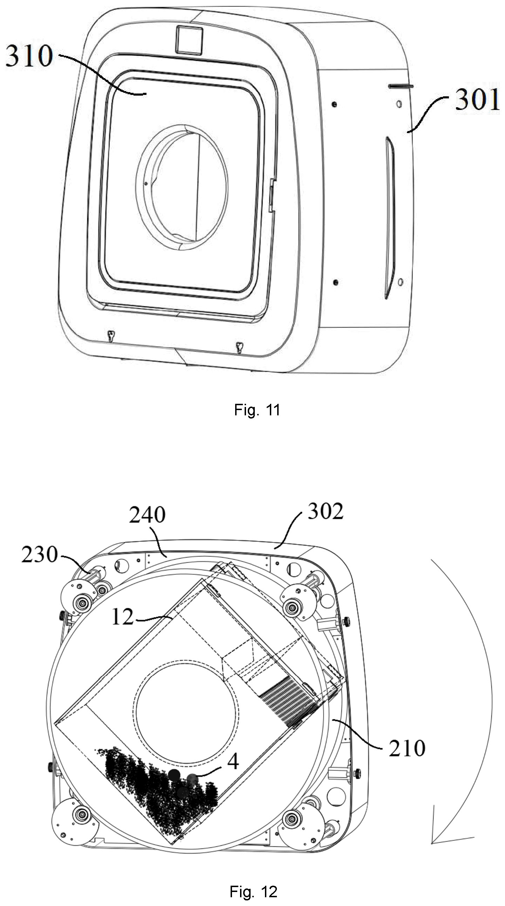

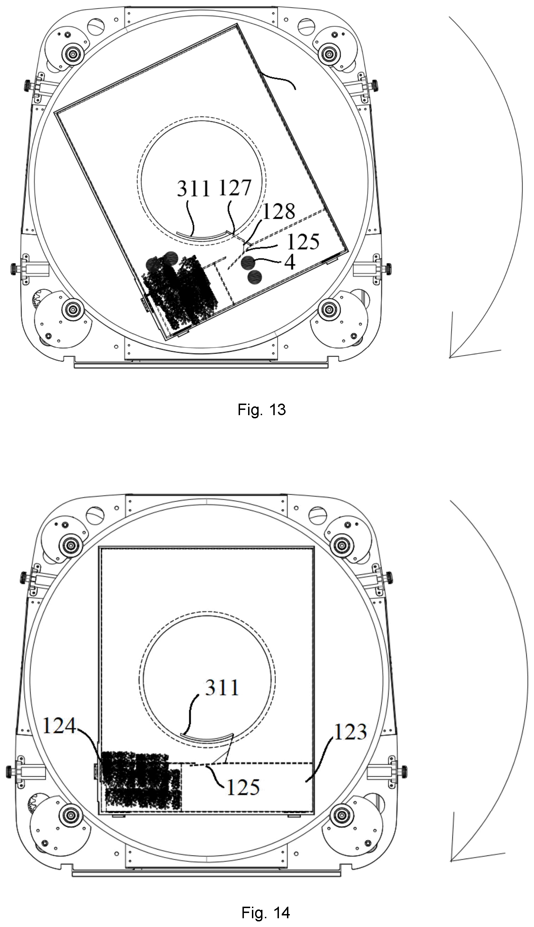

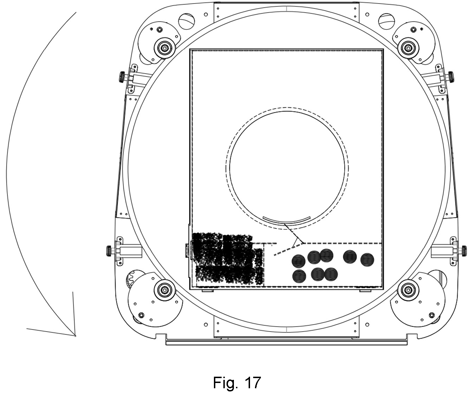

In one embodiment, as shown in Fig. 12 to 17, after the pet cat leaves the litter box 12, the first rotary compartment 210 first begins to perform a clockwise rotation in the direction of the arrow, wherein the toggle plate 311 on the panel 310 extends into the cat litter box 12;
After the cat litter box 12 is rotated to a certain angle, the baffle plate 127 comes into contact with the toggle plate 311 with the rotation of the cat litter box 12. As the litter box 12 continues to rotate, the baffle plate 127 unfolds along the lower edge of the toggle plate 311, with the angle of unfolding becoming progressively larger, and the door 125 is pulled by the second pull rope 128 to stop it from opening to the inside of the waste box 123. This setup will prevent the door 125 from opening prematurely and avoid the excrement in the waste box 123 from jamming the door 125 and resulting in cleaning failure.

When the clockwise rotation angle of the first rotary compartment 210 reaches the preset angle, the upper edge of the baffle plate 127 leaves the toggle plate 311, and the baffle plate 127 returns to the normal opening angle. At this time, the door 125 opens to the preset angle towards the inside of the waste box 123 due to gravity. Because of the rotating angle of the cat litter box 12, the excrement 4 which has been separated from the cat litter by the screen 126 falls within the range of the baffle plate 127 and continues to fall out of the door 125 into the waste box 123 due to the weight of the excrement 4.

After the clockwise rotation of the first rotary compartment 210 reaches a preset angle, the first rotary compartment 210 starts to rotate counterclockwise, and the opening of the door 125 is limited within a preset range by the second pull rope 128. The door 125 closes before the excrement 4 reaches the opening of the waste box 123 where the door 125 is fitted to confine the excrement 4 in the waste box 123.

In one embodiment, the cat litter is pre-loaded in the separation zone 124 of the folded cat litter box 12 for transport, storage and sale. During use, as the cat litter box 12 is unfolded, the cat litter in the separation zone 124 falls into the main compartment zone 122 and is spread even with the rotation of the first rotary compartment 210.

The cat litter cleaning device provided in this embodiment compresses the cat litter cleaning device by means of the retractable compartment and housing, which facilitates easy transport and storage of the device, and uses a removable cat litter box to separate the cat litter from the cat litter cleaning device to keep the device clean.

Although specific embodiments of the present disclosure have been described above, those skilled in the art will appreciate that this is merely illustrative and that the scope of protection of the present disclosure is defined by the appended claims. Those skilled in the art may make a variety of changes or modifications to these embodiments without departing from the principles and substance of the present disclosure, but these changes and modifications fall within the scope of protection of the present disclosure.

## Claims

1. A cat litter cleaning device, which is **characterized in that** it includes a driving module and an accommodating module;
the driving module is used to enable the accommodating module to rotate along a preset rotation axis;
the accommodating module comprises an accommodating cavity and a retractable unit, and the accommodating cavity is configured to be retractable and used for installing a cat litter box;
the retractable unit, which is connected to the accommodating cavity, is used to retract axially along the preset rotation axis.

2. The cat litter cleaning device according to claim 1 is **characterized in that** the accommodating cavity comprises a first rotary compartment and a second rotary compartment movably connected to the first rotary compartment, and the first rotary compartment is connected to the retractable unit so that the first rotary compartment is retractable.

3. The cat litter cleaning device according to claim 2 is **characterized in that** the first rotary compartment is provided with a first outer edge;
the retractable unit comprises at least two retractable rod members, the retractable rod member comprises a base and a retractable part, and the top end of the retractable part is provided with a first guide wheel that engages with the first outer edge;
the first guide wheel, which is movably connected to the first outer edge, is used to guide the first outer edge to rotate circumferentially along the first guide wheel, and the movement of the retractable part drives the first outer edge so that the first rotary compartment can retract.

4. The cat litter cleaning device according to claim 3 is **characterized in that** the second rotary compartment is provided with a second outer edge; the retractable unit further comprises a fixed platform, and the base of the retractable rod members is connected to the fixed platform;
the fixed platform is further provided with a second guide wheel parallel to the first guide wheel;
the second guide wheel is matched with the second outer edge, the second guide wheel is movably connected to the second outer edge, and the second guide wheel is used to guide the second outer edge to rotate circumferentially along the second guide wheel.

5. The cat litter cleaning device according to claim 2 is **characterized in that** the second rotary compartment is provided with a transmission part, and the transmission part is connected to the drive module;
the drive module drives the second rotary compartment to rotate via the transmission part, and the second rotary compartment drives the first rotary compartment to rotate.

6. The cat litter cleaning device according to claim 2 is **characterized in that** the cat litter box comprises a waste box, a separation zone and a main compartment zone, the waste box is separated from the main compartment zone by a partition with an inwardly opening door on the side facing the main compartment zone, an inlet is arranged on one side of the main compartment zone, and the waste box and the separation zone are arranged on the circumferential surface perpendicular to the inlet side;
the waste box further comprises a baffle plate rotating coaxially with and connected to the door, and the baffle plate is used to block the excrement from passing through the door; and/or, the separation zone is arranged adjacent to the waste box, and a screen is arranged between the separation zone and the main compartment zone.

7. The cat litter cleaning device according to claim 6 is **characterized in that** the main compartment zone of the cat litter box has a crease for folding the main compartment zone, which enables the main compartment zone to be folded by bending the crease; and the main compartment zone is provided with a first pull rope, one end of the first pull rope is connected to the baffle plate of the waste box, and the first pull rope is used to pull the baffle plate to stand up when the main compartment zone is unfolded;
and/or, the main compartment zone is made of waterproof material.

8. The cat litter cleaning device according to any one of claims 2 to 7 is **characterized in that** it further comprises a housing, and the housing comprises a first shell and a second shell, with the first shell being sleeved with the second shell;
The first shell is matched with the first rotary compartment and the first shell retracts synchronously with the first rotary compartment.

9. The cat litter cleaning device according to claim 8 is **characterized in that** the second shell is provided with a limiting unit, and the first shell is provided with a limiting hole matched with the limiting unit;
the limiting unit is configured to extend into the limiting hole to fix the first rotary compartment and the second rotary compartment when the first rotary compartment is raised to a preset position.

10. The cat litter cleaning device according to claim 8 is **characterized in that** the first shell comprises a panel, further comprising:
a detachable accessory, for which a plug-in interface is provided on the panel, used for installing the detachable accessory;
and/or, the panel is provided with an opening, and the opening is provided with a toggle plate formed by extending towards the inside of the housing;
the toggle plate is used for toggling the baffle plate in the cat litter box;
and/or, the panel is provided with an opening, and the opening is provided with a retaining edge formed by extending towards the inside of the housing.
